# EUROPÄISCHE PATENTSCHRIFT

(11) **EP 0 844 152 B1**
(45) Veröffentlichungstag und Bekanntmachung des Hinweises auf die Patenterteilung: **28.04.2004**
(21) Anmeldenummer: 97120194.2
(22) Anmeldetag: 18.11.1997
(51) Int. Cl.: B60R 22/35

(54) **Sicherheitsgurtvorrichtung für Kraftfahrzeuge**
Safety belt device for vehicles
Dispositif à ceinture de sécurité pour véhicules

(30) Priorität: 22.11.1996 DE 19648515
(43) Veröffentlichungstag der Anmeldung: 27.05.1998
(73) Patentinhaber: TAKATA-PETRI (Ulm) GmbH, 89081 Ulm (DE)
(72) Erfinder: Kopetzky, Robert, Dr., 89173 Lonsee (DE); Bannert, Georg, 88444 Ummendorf (DE); Hanna, Harry, Maralin, Craigavon BT 670 RB (IE)
(74) Vertreter: Maikowski, Michael, Dipl.-Ing. Dr.

(56) Entgegenhaltungen:
- EP-A- 0 298 123
- GB-A- 2 131 279
- US-A- 2 979 282
- US-A- 5 518 197

## Beschreibung

Die Erfindung betrifft eine Sicherheitsgurtvorrichtung für Kraftfahrzeuge nach dem Oberbegriff des Patentanspruchs 1.

Bei einer gattungsgemäßen Sicherheitsgurtvorrichtung gemäß der EP 0 298 123 A1 muss das Steuerzahnrad zwischen vollem Gurteinzug und vollem Gurtauszug einen deutlich über 180° liegenden Winkel zurücklegen, was eine relativ geringe Zähnezahl am Steuerzahnrad und Innenzahnkranz mit der Folge erfordert, dass der Eingriff der einzelnen Zähne beim Abrollen des Steuerzahnrades auf dem Innenzahnkranz erschwert ist.

Die Erfindung will eine gattungsgemäße Sicherheitsgurtvorrichtung schaffen, bei der die Eingriffscharakteristik zwischen Steuerzahnrad und Innenzahnkranz verbessert ist.

Zur Lösung dieser Aufgabe sind die Merkmale des kennzeichnenden Teils des Patentanspruchs 1 vorgesehen.

Vorteilhafte Weiterbildungen der Erfindung sind durch die Unteransprüche gekennzeichnet.

Die Winkelstellung des Steuerzahnrades kann nach den Ansprüchen 2, 3 in der verschiedensten Weise für die Anzeige des Auszugsgrades des Anschnaligurtes und/oder die Auslösung von Funktionen in Abhängigkeit vom Auszugsgrad des Anschnallgurtes ausgenutzt werden. Z. B. können bei bestimmten Winkelstellungen Schalter betätigt werden, die eine Anzeige und (oder Schaltfunktion auslösen.

Gemäß Anspruch 13 können am Nockenring und am diesen umgebenden Gehäuse auch Signalgeber/Signalempfänger-Paare angeordnet sein, wobei die eine Schaltposition ein zweites Signal an den Empfänger liefert.

In einer an den Empfänger angeschlossenen Anzeigevorrichtung kann somit zwischen der Position, in der der Anschnallgurt frei ausziehbar ist, und der Position, in der das erneute Ausziehen des Anschnallgurtes gesperrt ist, unterschieden werden. Hierdurch kann für den Fahrer bzw. für die sonstigen Insassen des Fahrzeugs eine Anzeigevorrichtung für ein einwandfreies Anschnallen zur Verfügung gestellt werden. Die letztgenannte Ausführungsform wird zwar bevorzugt in Verbindung mit der Wiederauszugssperre verwendet, kann jedodt auch allein benutzt werden, und zwar stets in Verbindung mit dem harmonischen Getriebe und dessen sich aus den verschiedenen Ansprüchen ergebenden besonderen Weiterbildungen.

Eine besonders kompakte Anordnung der bei schnell ausgezogenem Gurt wirksam werdenden Auszugssperrmechanik entnimmt man Anspruch 14.

Das Ratschenzahnrad kann nach Anspruch 15 gleichzeitig auch die bei einer unfallbedingten Beschleunigung erforderliche Auszugssperre bewirken, was für den Fall wichtig ist, dass der Fahrzeuginsasse vor dem Anschnallen den Gurt nicht voll ausgezogen hatte, so dass die Wiederauszugssperre nicht eingeschaltet wird.

Der kompakten Anordnung dient auch die Maßnahme des Anspruchs 16.

Die Erfindung wird im folgenden beispielsweise anhand der Zeichnung beschrieben; in dieser zeigt
- Figur 1: eine teilweise geschnittene Ansicht des Gurtaufrollers einer erfindungsgemäßen Sicherheitsgurtvorrtchtung in einer die Drehachse und die Auszugsrichtung enthaltenden Ebene,
- Figur 2: eine teilweise geschnittene Seitenansicht des Gegenstandes der Fig. 1 und die
- Fig. 3a-3d: vereinfachte Ansichten analog Fig. 2 bei unterschiedlichen Aus- bzw.
Einzugslängen des Anschnallgurtes.

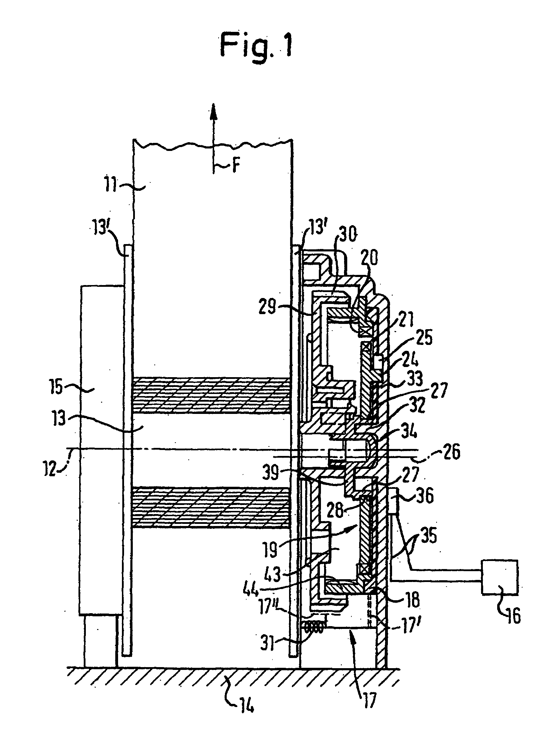

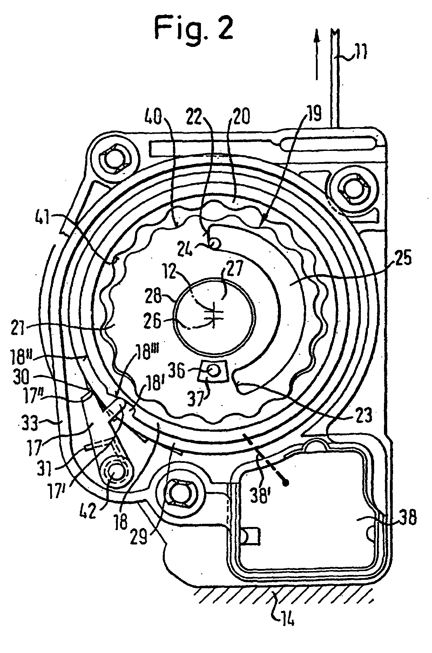

Nach den Figuren 1 und 2 weist eine am Fahrzeugchassis 14 befestigte erfindungsgemäße Sicherheltsgurtvorrichtung eine um eine Quer-Drehachse 12 drehbare Gurtrolle 13 mit zwei seitlichen Führungsflanschen 13' auf, auf welche ein in Richtung des Pfeiles F ausziehbarer Anschnallgurt 11 mehr oder weniger weit aufgewickelt ist. An einer Stirnseite der Gurtrolle 13 befindet sich eine nur schematisch angedeutete Federrückholmechanik 15, weiche dauernd ein einrollendes Drehmoment auf die Gurtrolle ausübt.

Auf der von der Federrückholmechanik 15 abgewandten Stirnseite der Gurtrolle 13 ist ein zum angrenzenden Flansch 13' offenes, chassisfreies, im wesentlichen topfförmiges Gehäuse 33 vorgesehen, in das hinein sich ein zentraler und zur Drehachse 12 konzentrischer Lagerzapfen 34 der Gurtrolle 13 erstreckt. Für die Aufnahme des von der Gurtrolle 13 abgewandten Endes des Lagerzapfens 34 ist an der Innenwand des Gehäuses 33 ein hohler Lagervorsprung 32 vorgesehen, dessen Innenraum ebenfalls zur Drehachse 12 konzentrisch ist und den mit der Gurtrolle 13 drehfest verbundenen Lagerzapfen 34 im Gleitsitz aufnimmt. Unmittelbar außerhalb des Lagervorsprunges 32 erstreckt sich vom Lagerzapfen 34 radial eine Exzenter-Scheibe 39, welche an ihrem Umfang einen sich in Richtung auf das Gehäuse 33 erstreckenden hohlen Exzenter-Lagerzapfen 27 trägt. Die Mittelachse 26 des Exzenter-Lagerhohlzapfens 27 verläuft parallel und in geringem Abstand zur Drehachse 12.

Der Exzenter-Lagerhohlzapfen 27 übergreift axial den Lagervorsprung 32 berührungslos oder mit Berührung nur an einer Umfangsstelle und erstreckt sich dabei im Gleitsitz in eine zentrale Lagerbohrung 28 eines kreisringförmigen, scheibenförmigen Steuerzahnrades 21, dessen Mittelachse mit der Mittelachse 26 des Exzenter-Lagerzapfens 27 zusammenfällt und welches auf seinem Außenumfang mit einer wellenförmigen Verzahnung 40 versehen ist, die über den Umfang gleichmäßig verteilt insgesamt 17 Wellenzähne aufweist.

Rund um das Steuerzahnrad 21 erstreckt eine einen größeren Durchmesser aufweisender, gehäusefester Innenzahnkranz 20, welcher mit einer zur Außenverzahnung 40 des Steuerzahnrads 21 komplementären wellenförmigen Verzahnung 41 versehen ist, die jedoch aus 18 Zähnen besteht. An einer Umfangsseite befinden sich das Steuerzahnrad 21 und der Innenzahnkranz 20 jeweils im kämmendem Eingriff, während diametral gegenüberliegend die Verzahnungen 40, 41 sich nicht berühren, derart, daß das Steuerzahnrad 21 angetrieben vom Exzenter-Lagerhohlzapfen 27 auf dem Innenzahnkranz 20 abrollen kann.

Parallel zu dem Steuerzahnrad 21 ist zwischen diesem und der Flachseite des Gehäuses 33 ein scheibenförmiger Nockenring 18 auf dem Lagervorsprung 32 drehbar angeordnet. Der Nockenring 18 besitzt nach Fig. 2 einen sich über annähernd 180° konzentrisch zur Drehachse 12 erstreckenden peripheren Schlitz 25, dessen radiale Breite der Exzentrizität der Mittelachse 26 entspricht. Durch die Drehlagerung auf dem Lagervorsprung 32 ist der scheibenförmige Nockenring 18 um die Drehachse 12 verdrehbar.

Nach Fig. 2 weist der Nockenring 18 eine kreisförmige Umfangsfläche 18'' auf, die an einer Umfangsstelle durch eine radial nach innen vorspringende Eingriffsvertiefung 18' unterbrochen ist, wobei zwischen der tiefsten Stelle der Eingriffsvertiefung 18' und der normalen Umfangsfläche 18'' eine kulissenartige Schrägfläche 18''' vorgesehen ist.

Im wesentlichen radial außerhalb der Eingriffsvertiefung 18'' ist am Gehäuse 33 eine Sperrklinke 17 um eine parallel zur Drehachse 12 verlaufende Schwenkachse 42 gelenkig angeordnet. Die Sperrklinke 17 weist einen Steuervorsprung 17' auf, der in der Drehposition des Nockenringes 18 nach Fig. 2 in die Eingriffsvertiefung 18' eingreift. Mit einer Rastkante 17'' rastet die Sperrklinke 17 nach Fig. 2 in die Ratschenzähne 30 eines Ratschenzahnrades 29 ein, welches drehfest mit der Gurtrolle 13 verbunden und zu dieser koaxial ist. Die Ratschenzähne 30 sind so gerichtet, daß aus der in Fig. 2 dargestellten eingerasteten Position nur ein Einrollen, nicht aber ein Ausziehen des Anschnallgurtes 11 möglich ist.

Von besonderer Bedeutung für eine kompakte Ausbildung ist die zum Steuerzahnrad 21 hin offene, topfförmige Ausbildung des Ratschenzahnrads 29, in welches sich von der offenen Seite her ein zur Drehachse 12 konzentrischer, hohlzylindrischer Vorsprung 44 des Innenzahnkranzes 20 bzw. des Gehäuses 33 erstreckt, zwischen dem und dem Lagerzapfen 34 eine Gurtsensormasse 43 wirksam ist, die bei zu schnellem Auszug des Anschnallgurtes 11 den weiteren Auszug sperrt.

An der von dem Ratschenzahnrad 29 abgewandten Stirnseite der Gurtsensormasse 43 liegt das scheibenförmige Steuerzahnrad 21 an, welches zusammen mit der flachen Seite des Gehäuse 33 den als schmale Scheibe ausgebildeten Nockenring 18 einschließt. Die aus Figur 1 und 2 ersichtlich bauliche Anordnung ist also von besonderem Vorteil.

Die Sperrklinke 17 ist durch eine Wickelfeder 31 auf das Ratschenzahnrad 29 bzw. den Umfang des Nockenrings 18 zu federnd vorgespannt.

In Fig. 1 ist die Sperrklinke 17 mit dem Steuervorsprung 17' sowie der Rastkante 17" nur rein schematisch angedeutet, um das wechselseitige Zusammenwirken mit dem Ratschenzahnrad 29 und dem Nockenring 18 zu veranschaulichen.

Von dem scheibenförmigen Steuerzahnrad 21 erstreckt sich nach den Figuren 1 und 2 ein einen Gegenanschlag bildender Stift 24 in den peripheren Schlitz 25 des Nockenringes 18 hinein, dessen Enden im wesentlichen radial verlaufen und jeweils einen Anschlag 22 bzw. 23 für den Stift 24 darstellen.

Nach Fig.2 ist außerdem ein Beschleunigungssensor 38 vorgesehen, der bei unfallbedingten Beschleunigungen einen nur schematisch angedeuteten Klinkenmechanismus 38' in Eingriff mit den Ratschenzähnen 30 bringt, um so ein weiteres Ausziehen des Anschnallgurtes 11 zu verhindern. Das Ratschenzahnrad 29 wird hier also doppelt ausgenutzt. Weitere Einzelheiten der beschriebenen Sicherheitsgurtvorrichtung entnimmt man der folgenden Funktionsbeschreibung anhand der Figuren 1, 2 und 3a, 3b, 3c sowie 3d:

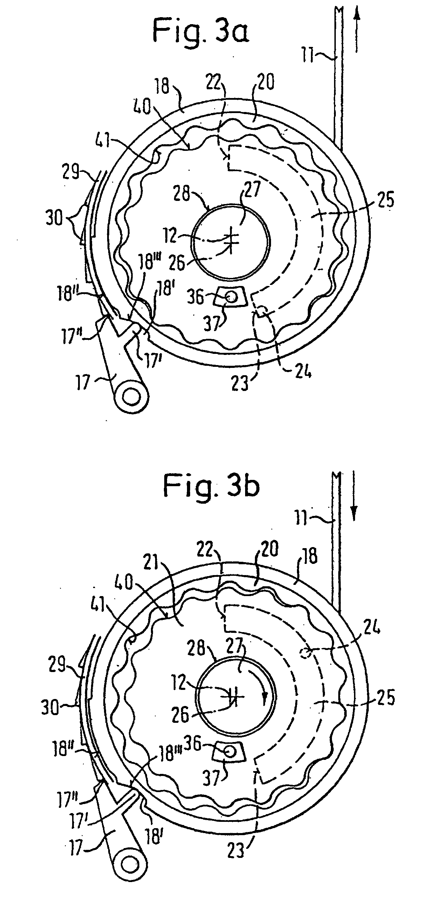

Fig. 3a zeigt die Sicherheitsgurtvorrichtung in Richtung des Pfeiles voll ausgezogenem Zustand des Anschnallgurtes 11. In dieser Position stößt der Stift 24 an den im Uhrzeigersinn vorderen Anschlag 23 des Schlitzes 25, wodurch der Nockenring 18 im Uhrzeigersinn soweit verdreht, bis der Steuervorsprung 17' der Sperrklinke 17 in die Eingriffsvertiefung 18' am Umfang des Nockenringes 18 einrastet. Hierdurch gelangt die Rastkante 17'' der Sperrklinke 17 in den Bereich der Ratschenzähne 30 des Ratschenzahnrades 29.

Wird der Anschnallgurt 11 nunmehr an den Insassen angelegt und mit seinem freien Ende im Gurtschloß befestigt, so rollt anschließend die Rückholfedermechanik 15 (Fig. 1) den Anschnallgurt 11 durch entsprechende Drehung der Gurtrolle 13 in Pfeilrichtung gemäß Fig. 3b auf, bis der Anschnallgurt 11 in der gewünschten Weise am Insassen anliegt. Hierbei dreht sich Exzenter-Lagerzapfen 27 im Uhrzeigersinn und wälzt das drehbar auf ihm sitzende Steuerzahnrad 21 auf dem Innenzahnkranz 20 ab, so daß dieses zahlreiche Umdrehungen um die Drehachse 12 vollführt, wobei aufgrund der gegenüber dem Innenzahnkranz geringeren Zähnezahl des Steuerzahnrads 21 letzteres relativ zur Drehachse 12 sich allmählich entgegen dem Uhrzeigersinn dreht, so daß der Stift 24 sich - ausgehend von der Position nach Fig. 3a - langsam entgegen dem Uhrzeigersinn innerhalb des Umfangsschlitzes 25 bewegt, z.B. bis zu der Position nach Fig. 3b. Es sei angenommen, daß bei der Teil-Einzugsposition gemäß Fig. 3b der Anschnallgurt 11 ausreichend dicht am angeschnallten Insassen anliegt, wodurch ein weiteres Einziehen des Anschnallgurtes 11 verhindert wird.

Versucht jetzt der Insasse den Anschnallgurt 11 entgegen der Pfeilrichtung in Fig. 3b auszuziehen, so wird dies durch die in einen der Ratschenzähne 30 eingreifende Sperrklinke 17 verhindert.

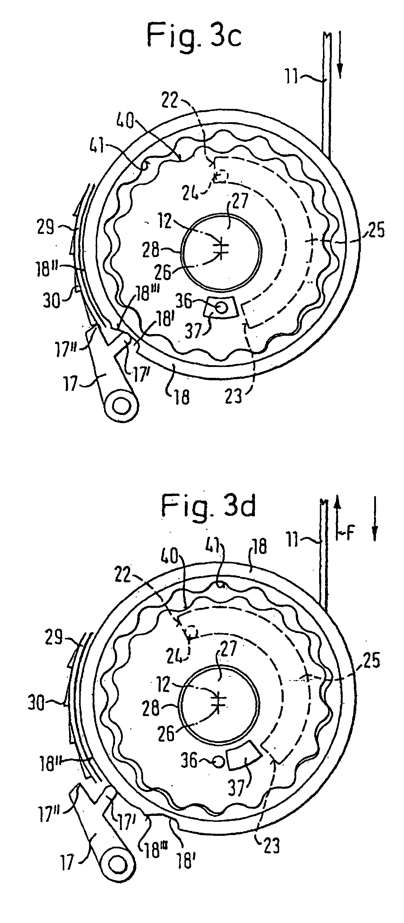

Wird jedoch der Anschnallgurt 11 vom Insassen gelöst, kann die Federrückholmechanik 15 den Anschnallgurt 11 in Richtung des Pfeiles in Fig. 3b weiter aufrollen, wobei die Rastkante 17'' der Klinke 17 die entsprechend geformten Ratschenzähne 30 überspringt. Dabei wälzt sich das Steuerzahnrad 21 weiter auf dem Innenzahnkranz 20 ab, wobei sich der Stift 24 ausgehend von der Position in Fig. 3b weiter entgegen dem Uhrzeigersinn bewegt, bis er schließlich bei der fast vollständig :eingerollten Position nach Fig. 3c an der stirnseitigen Anschlagfläche 22 des Nockenrings 18 zur Anlage kommt und diesen in Umfangsrichtung in die aus Fig. 3d ersichtliche Position mitnimmt. Hierbei gleitet der Steuervorsprung 17' an der Schrägfläche 18''' der Eingriffsvertiefung 18'' entlang aus letzterer heraus und kommt an der radial weiter außen liegenden normalen Umfangsfläche 18' des Nockenrings 18 zur Anlage, wobei die Rastkante 17'' mit den Ratschenzähnen 30 des Ratschenzahnrads 29 außer Eingriff kommt, so daß nunmehr ein erneutes Ausziehen des Anschnallgurtes 11 in Richtung des Pfeiles F ungehindert durch die Rastklinke 17 möglich ist. Dieses Ausziehen kann dann wieder solange vor sich gehen, bis der Stift 24 die entgegengesetzte Anschlagfläche 23 des Umfangsschlitzes 25 erreicht, worauf dann vom Stift 24 der Nockenring 18 soweit im Uhrzeigersinn verdreht wird, bis der Steuervorsprung 17' der Rastklinke 17 erneut in die Eingriffsvertiefung 18'' einfällt und somit die Rastkante 17'' erneut mit den Ratschenzähnen 30 in Eingriff kommt, dann ist wiederum nur ein Einziehen, nicht aber ein zwischenzeitliches Ausziehen des Anschnallgurtes 11 möglich.

Nach der Zeichnung ist am Gehäuse 33 ein Hall-Schalter 36 vorgesehen, der mit einem auf dem Nockenring 18 vorgesehenen Magnetbelag 37 zusammenwirkt. Leitungen 35 (Fig. 1) führen vom Hall-Schalter 36 zu einer nur schematisch angedeuteten Anzeigevorrichtung 16. Der Magnetbelag 37 könnte auch am Steuerzahnrad 21 vorgesehen sein. Der Magnetbelag 37 und der Hall-Schalter 36 können als Signalgeber und Signalempfänger angesehen werden.

Wie man den Figuren 3a bis 3c entnimmt, befinden sich der Hall-Schalter 36 und der Magnetbelag 37 bei in die Eingriffsvertiefung 18'' eingerasteter Sperrklinke 17 in Ausrichtung miteinander, worauf die Anzeigevorrichtung 16 ein Signal abgibt, welches den Insassen zeigt, daß die erfindungsgemäße Sicherheitsgurtvorrichtung sich in der sicheren Schaltposition befindet, wo nur ein Einziehen, nicht aber ein Ausziehen des Anschnallgurtes 11 möglich ist.

In der voll eingezogenen Position des Anschnallgurtes 11 nach Fig. 3d kommen der Hall-Schalter 36 und der Magnetbelag 37 außer Ausrichtung miteinander, wodurch der Hall-Schalter 36 in seine andere Schaltstellung umschaltet und die Anzeigevorrichtung 16 nunmehr entweder gar kein Signal oder ein anderes Signal abgibt, welches den Insassen darauf hinweist, daß sich die Sicherheitsgurtvorrichtung nicht in der Sicherheits-Schaltlage befindet, wo ein Ausziehen des Anschnallgurtes aus einer bestimmten Position heraus nicht möglich ist.

Wichtig ist auf jeden Fall, daß zwischen der Gurtrolle 13 und dem Anzeige- bzw. Auslösemechanismus ein eine starke Untersetzung gewährleistendes harmonisches Getriebe 19 vorliegt. Die maximale Schwenkbewegung des Nockenringes 18 liegt - wie sich aus dem Vergleich der Figuren 3c und 3d ergibt - bei etwa 25°. Sie kann auch bei sonstigen Winkeln zwischen 10 und 30° liegen.

### Bezugszeichenliste

- 11: Anschnallgurt
- 12: Drehachse
- 13: Gurtrolle
- 13': Führungsflansche
- 14: Fahrzeugchassis
- 15: Federrückholmechanik
- 16: Anzeigvorrichtung
- 17: Sperrklinke
- 17': Steuervorsprung
- 17'': Rastkante
- 18: Nockenring
- 18': Eingriffsvertiefung
- 18'': Umfangsfläche
- 18''': Schrägfläche
- 19: Untersetzungsgetriebe
- 20: Innenzahnkranz
- 21: Steuerzahnrad
- 22: Anschlag
- 23: Anschlag
- 24: Gegenanschlag (Stift)
- 25: Schlitz
- 26: Mittelachse
- 27: Exzenter-Lagerhohlzapfen
- 28: Lagerbohrung
- 29: Ratschenzähnrad
- 30: Ratschenzähne
- 31: Feder
- 32: Lagervorsprung
- 33: Gehäuse
- 34: Lagerzapfen
- 35: Leitung
- 36: Hall-Schalter
- 37: Magnetbelag
- 38: Beschleunigungssensor
- 38': Klinkenmechanismus
- 39: Exzenter-Scheibe
- 40: Verzahnung
- 41: Verzahnung
- 42: Schwenkachse
- 43: Gurtsensormasse
- 44: Vorsprung

## Patentansprüche

1. Sicherheitsgurtvorrichtung für Kraftfahrzeuge mit wenigstens einem Anschnallgurt (11), der mehr oder weniger weit auf eine am Fahrzeugchassis (14) um eine Drehachse (12) drehbar befestigte Gurtrolle (13) aufgewickelt ist, weiche vorzugsweise durch eine Federrückholmechanik (15) in Gurtaufwickelrichtung vorgespannt ist und eine Auszugssperrmechanik (38, 43) aufweist, die bei einem schnellen Auszug des Anschnallgurtes und/oder bei unfallbedingten Beschleunigungen des Kraftfahrzeuges ein weiteres Ausziehen des Anschnallgurtes (11) sperrt, wobei mit der Gurtrolle (13) ein Steuerzahnrad (21) über einen Exzenterantrieb (34, 27, 28) verbunden ist und auf seinem Umfang eine vorzugsweise wellenförmige Verzahnung (40) aufweist, die von einem gehäusefesten Innenzahnkranz (20) mit größerem Durchmesser und komplementärer Innenverzahnung (41), jedoch einer größeren Zähnezahl derart umgeben ist, wobei das Steuerzahnrad (21) in jeweils einem begrenzten Umfangsbereich mit dem Innenzahnkranz (20) in kämmendem Eingriff steht und diametral gegenüber den beiden Verzahnungen (40, 41) einen solchen radialen Abstand aufweisen, dass sich das Steuerzahnrad (21) beim Drehen der Gurtrolle (13) auf dem Innenzahnkranz (20) abwälzt, wobei das Steuerzahnrad (21) über einen Nockenring (18) auf eine Sperrklinke (17) einwirkt, die mit einem sich mit der Gurtrolle (13) drehendes Ratschenzahnrad (29) derart in und außer Eingriff gebracht wird, dass die Sperrklinke (17) das Ratschenzahnrad (29) bei zumindest weitgehend voll ausgezogenem Gurt (11) gegen Drehung in Gurtauszugsrichtung sperrt und bei zumindest weitgehend eingezogenem Gurt (11) wieder außer Eingriff mit dem Ratschenzahnrad kommt,
**dadurch gekennzeichnet,**
**dass** der Gesamtauszugslänge des Anschnallgurtes (11) ein Drehwinkel des Steuerzahnrades (21) relativ zur Drehachse (12) von im Wesentlichen 180 Grad entspricht, und dass ein Signalgeber vorhanden ist, der die momentane WinkelPosition des Steuerzahnrades (21) als Maß für den Auszugsgrad des Anschnallgurtes (11) signalisiert.

2. Sichertteitsgurtvorrichtung nach Anspruch 1, **dadurch gekennzeichnet, dass** auf dem Steuerzahnrad (21) ein Vorsprung, insbesondere Stift (24) vorgesehen ist, dessen periphere und/oder radiale Position als Maß für den Grad des Ausziehens des Anschnallgurtes (11) verwendet wird.

3. Sicherheitsgurtvorrichtung nach Anspruch 1 oder 2, **dadurch gekennzeichnet, dass** am Steuerzahnrad (21) ein Signalgeber und am Gehäuse ein Signalempfänger oder umgekehrt vorgesehen ist und dass durch Feststellung der Relativposition von Signalempfänger und Signalgeber die momentane Auszugsposition des Anschnaligurtes (11) feststellbar ist.

4. Vorrichtung nach einem der vorangehenden Ansprüche, **dadurch gekennzeichnet, dass** zwei im Winkeiabstand am Nockenring (18) vorgesehene Anschläge (22, 23) mit einem Gegenanschlag (24) am Steuerzahnrad (21) derart zusammenwirken, dass der Nockenring bei zumindest annähernd voll ausgezogenem Anschnallgurt (11) eine Auszugssperrstellung und bei zumindest annähernd voll eingezogenem Anschnallgurt (11) eine Auszugsfreigabestellung annimmt

5. Vorrichtung nach Anspruch 4, **dadurch gekennzeichnet, dass** sich vom Steuerzahnrad (21) in einem radialen Abstand von der Mittelachse (12) axial ein den Gegenanschlag bildender Stift (24) in einem peripheren Schlitz (25) des Nockenrings erstreckt, dessen radiale Breite so groß ist, dass der Stift (24) sich beim Umlaufen des Steuerzahnrades (21) radial im Schlitz (25) frei bewegen kann, und dessen periphere Enden die Anschläge (22, 23) bilden.

6. Vorrichtung nach einem der vorangehenden Ansprüche, **dadurch gekennzeichnet, dass** zwischen der zur Drehachse (12) der Gurtrolle (13) exzentrischen Mittelachse (26) des Steuerzahnrades (21) und der Drehachse (12) der Gurtrolle (13) ein exzentrisches Gleitlager (27, 28) vorgesehen ist.

7. Vorrichtung nach Anspruch 6, **dadurch gekennzeichnet, dass** sich von einem mit der Gurtrolle (13) drehbaren Teil (38) exzentrisch zur Drehachse (12) der Gurtrolle (13) ein Exzenter-Lagerhohlzapfen (27) axial in eine zentrale Lagerbohrung (28) des Steuerzahnrades (21) erstreckt.

8. Vorrichtung nach einem der vorhergehenden Ansprüche, **dadurch gekennzeichnet, dass** auf der Drehachse (12) der Gurtrolle (13) das mit dieser drehfest gekoppelte Ratschenzahnrad (29) angeordnet ist, in weiches vorzugsweise radial von außen die Sperrklinke (17) eingreift, weiche vorzugsweise durch eine Feder (31) auf die Eingriffsstellung zu vorgespannt ist.

9. Vorrichtung nach Anspruch 8, **dadurch gekennzeichnet, dass** an der Sperrklinke (17) außerdem ein Steuervorsprung (17') vorgesehen ist, der mit dem Umfang des Nockenringes (18) zusammenwirkt.

10. Vorrichtung nach Anspruch 8, **dadurch gekennzeichnet, dass** im Umfang des Nockenringes (18) eine Eingriffsvertiefung (18') vorgesehen ist und dass sich die Sperrklirrke (17) in Eingriff mit den Ratschenzähnen (30) des Ratschenzahnrades (29) befindet, wenn der Steuervorsprung (17') in die Eingriffsvertiefung (18') eingerastet ist, und außer Eingriff mit den Ratschenzähnen (30) des Ratschenzahnrades (29), wenn der Steuervorsprung (17') sich außerhalb der Eingriffsvertiefung (18') auf dem normalen Umfang (18") des Nockenringes (18) befindet

11. Vorrichtung nach Anspruch 10, **dadurch gekennzeichnet, dass** die Eingriffsvertiefung über eine Schrägfläche (18''') in den radial weiter außen liegenden normalen Umfang (18") des Nockenrings (18) übergeht.

12. Vorrichtung nach einem der vorhergehenden Ansprüche, **dadurch gekennzeichnet, dass** der Nockenring (18) auf einem zur Drehachse (12) konzentrischen, hohlen Lagervorsprung (32) eines insbesondere topfförmigen Gehäuses (33) drehbar angebracht ist, in dessen Innenraum ein mit der Gurtrolle (12) konzentrischer und drehfest verbundener Lagerzapfen (34) vorzugsweise im Gleitsitz eingreift, und dass an dem zentrischen Lagerzapfen (34) ein Exzenter-Lagerzapfen (27) größeren Durchmessers angeordnet ist, der in die zu ihm komplementäre Lagerbohrung (28) im Zentrum des Steuerzahnrades (21) vorzugsweise im Gleitsitz eingreift.

13. Vorrichtung nach einem der vorhergehenden Ansprüche, **dadurch gekennzeichnet, dass** an dem Nockenring (18) ein Signalgeber, insbesondere ein Magnetsegment (37) und am Gehäuse (33) ein damit zusammenwirkender Signalempfänger, insbesondere ein Hall-Schalter (36) vorgesehen ist, welcher mit einer Anschnall-Anzeigevorrichtung (16) verbunden ist

14. Vorrichtung nach einem der vorhergehenden Ansprüche, **dadurch gekennzeichnet, dass** die Auszugssperrmechanik einen sich von dem Innenzahnkranz (20) oder Gehäuse (33) radial außen axial in Richtung der Gurtrolle (13) erstreckenden hohlzylindrischen Vorsprung (44) und eine in seinem Inneren angeordnete Gurtsensormasse (43), die radial außen mit dem Vorsprung (44) und radial innen mit dem Lagerzapfen (34) zusammenwirkt.

15. Vorrichtung nach einem der vorangehenden Ansprüche, **dadurch gekennzeichnet, dass** die Auszugssperrmechanik einen Beschleunigungssensor, insbesondere Querbeschleunigungssensor (38) aufweist, der insbesondere über einen Minkenmechanisinus (38') mit einem mit der Gurtrolle (13) drehfest verbundenen Bauteil, vorzugsweise dem Ratschenzahnrad (29) derart zusammenwirkt, dass bei unfallbedingten Beschleunigungen der weitere Auszug des Anschnallgurtes (11) gesperrt wird.

16. Vorrichtung nach Anspruch 14. oder 15, **dadurch gekennzeichnet, dass** das Ratschenzahnrad (29) topfförmig ausgebildet ist, und die die Ratschenzähne (30) aufweisende Wand sich radial außen mit dem hohlzylindrischen Vorsprung (44 überlappt.

## Claims

1. Seat belt device for motor vehicles, having at least one seat belt (11) which is coiled up to a greater or lesser extent onto a belt roller (13) which is fastened to the vehicle chassis (14) in a manner such that it can rotate about an axis of rotation (12), which is prestressed in the belt-coiling-up direction preferably by means of a spring restoring mechanism (15) and has an extension-blocking mechanism (38, 43) which blocks a further extension of the seat belt (11) if the seat belt is extended rapidly and/or in the case of accident-induced accelerations of the motor vehicle, a toothed control wheel (21) being connected to the belt roller (13) via an eccentric drive (34, 27, 28) and on its circumference having a preferably undulating toothing (40) which is surrounded by an inner toothed ring (20), which is fixed on the housing and has a larger diameter and complementary inner toothing (41) but with a greater number of teeth, the toothed control wheel (21) being in meshing engagement, in a limited circumferential region in each case, with the inner toothed ring (20), and, diametrically opposite each other, the two toothings (40, 41) are at such a radial distance that the toothed control wheel (21) rolls along the inner toothed ring (20) during rotation of the belt roller (13), the toothed control wheel (21) acting via a cam ring (18) on a pawl (17) which is brought into and out of engagement with the toothed ratchet wheel (29), which rotates together with the belt roller (13), in such a manner that, when the belt (11) is at least largely fully extended, the pawl (17) blocks the toothed ratchet wheel (29) against rotation in the belt extension direction and, when the belt (11) is at least largely retracted, the pawl is disengaged again from the toothed ratchet wheel, **characterized in that** an angle of rotation of the toothed control wheel (21) relative to the axis of rotation (12) of essentially 180° corresponds to the entire extension length of the seat belt (11), and **in that** there is a signal transmitter which signals the current angular position of the toothed control wheel (21) as a measure of the degree of extension of the seat belt (11).

2. Seat belt device according to Claim 1, **characterized in that** the toothed control wheel (21) is provided with a projection, in particular pin (24), the peripheral and/or radial position of which is used as a measure for the degree of extension of the seat belt (11).

3. Seat belt device according to Claim 1 or 2, **characterized in that** a signal transmitter is provided on the toothed control wheel (21) and a signal receiver on the housing, or vice versa, and **in that** the current extension position of the seat belt (11) can be ascertained by ascertaining the relative position of the signal receiver and signal transmitter.

4. Device according to one of the preceding claims, **characterized in that** two stops (22, 23) which are provided at an angular distance on the cam ring (18) interact with a counter stop (24) on the toothed control wheel (21) in such a manner that, when the seat belt (11) is at least approximately fully extended, the cam ring takes up an extension-blocking position and, when the seat belt (11) is at least approximately fully retracted, the cam ring takes up an extension-releasing position.

5. Device according to Claim 4, **characterized in that** a pin (24) which forms the counter stop extends from the toothed control wheel (21) axially at a radial distance from the centre axis (12) into a peripheral slot (25) of the cam ring, the radial width of which slot is of a sufficient size for the pin (24) to be able to move freely radially in the slot (25) when the toothed control wheel (21) revolves, and the peripheral ends of which slot form the stops (22, 23).

6. Device according to one of the preceding claims, **characterized in that** an eccentric sliding bearing (27, 28) is provided between the centre axis (26) of the toothed control wheel (21), which axis is eccentric with respect to the axis of rotation (12) of the belt roller (13), and the axis of rotation (12) of the belt roller (13).

7. Device according to Claim 6, **characterized in that** an eccentric hollow bearing journal (27) extends eccentrically with respect to the axis of rotation (12) of the belt roller (13) from a part (38) which can be rotated together with the belt roller (13) axially into a central bearing hole (28) of the toothed control wheel (21).

8. Device according to one of the preceding claims, **characterized in that** the toothed ratchet wheel (29) which is coupled in a rotationally fixed manner to the belt roller (13) is arranged on the axis of rotation (12) of the belt roller (13) and the pawl (17) engages preferably radially outwards in the said toothed ratchet wheel (29) and is prestressed towards the engagement position preferably by means of a spring (31).

9. Device according to Claim 8, **characterized in that** a control projection (17') which interacts with the circumference of the cam ring (18) is also provided on the pawl (17).

10. Device according to Claim 8, **characterized in that** an engagement depression (18') is provided in the circumference of the cam ring (18), and **in that** the pawl (17) is in engagement with the ratchet teeth (30) of the toothed ratchet wheel (29) when the control projection (17') is latched into the engagement depression (18'), and is disengaged from the ratchet teeth (30) of the toothed ratchet wheel (29) when the control projection (17') is situated outside the engagement depression (18') on the normal circumference (18") of the cam ring (18).

11. Device according to Claim 10, **characterized in that** the engagement depression merges via an oblique surface (18"') into the radially further outward, normal circumference (18") of the cam ring (18).

12. Device according to one of the preceding claims, **characterized in that** the cam ring (18) is fitted rotatably on a hollow bearing projection (32), which is concentric with respect to the axis of rotation (12), of a housing (33) which is cup-shaped in particular and in the interior of which a concentric bearing journal (34) which is connected in a rotationally fixed manner to the belt roller (12) engages preferably with a sliding fit, and **in that** an eccentric bearing journal (27) of larger diameter is arranged on the centric bearing journal (34) and engages in the bearing hole (28), which is complementary to it, in the centre of the toothed control wheel (21), preferably with a sliding fit.

13. Device according to one of the preceding claims, **characterized in that** a signal transmitter, in particular a magnetic segment (37), is provided on the cam ring (18) and a signal receiver which interacts therewith, in particular a Hall switch (36), is provided on the housing (33) and is connected to a seat-belt-fastening display device (16).

14. Device according to one of the preceding claims, **characterized in that** the extension-blocking mechanism has a hollow cylindrical projection (44) which extends axially in the direction of the belt roller (13) radially outwards from the inner toothed ring (20) or housing (33), and a belt sensor mass (43) which is arranged in the interior of the said projection and interacts radially on the outside with the projection (44) and radially on the inside with the bearing journal (34).

15. Device according to one of the preceding claims, **characterized in that** the extension-blocking mechanism has an acceleration sensor, in particular transverse acceleration sensor (38), which interacts, in particular via a pawl mechanism (38'), with a component which is connected in a rotationally fixed manner to the belt roller (13), preferably with the toothed ratchet wheel (29), in such a manner that when there are accident-induced accelerations, the further extension of the seat belt (11) is blocked.

16. Device according to Claim 14 or 15, **characterized in that** the toothed ratchet wheel (29) is of cup-shaped design, and the wall having the ratchet teeth (30) overlaps radially on the outside with the hollow cylindrical projection (44).

## Revendications

1. Dispositif à ceinture de sécurité pour véhicules comprenant au moins une ceinture de sécurité (11), qui est enroulée plus ou moins largement sur un enrouleur (13) fixé de manière rotative sur le châssis du véhicule (14) autour d'un axe de rotation (12), lequel est de préférence précontraint par un mécanisme de rappel à ressort (15) dans la direction d'enroulement de la ceinture et présente un mécanisme de blocage de traction (38, 43) qui dans le cas d'une traction rapide de la ceinture de sécurité et/ou dans le cas d'accélérations provoquées par un accident du véhicule, bloque une traction supplémentaire de la ceinture de sécurité (11), une roue dentée de commande (21) étant connectée à l'enrouleur (13) par le biais d'un entraînement par excentrique (34, 27, 28) et présentant sur sa périphérie une denture (40) de préférence de forme ondulée, qui est entourée par une couronne dentée interne (20) fixée au boîtier ayant un diamètre plus grand et une denture interne complémentaire (41), mais un nombre de dents plus important, de telle sorte que la roue dentée de commande (21) soit en engagement par engrènement, à chaque fois dans une région périphérique limitée, avec la couronne dentée interne (20) et, en position diamétralement opposée des deux dentures (40, 41), que celles-ci présentent une distance radiale telle que la roue dentée de commande (21) lors de la rotation de l'enrouleur (13) roule sur la couronne dentée interne (20), la roue dentée de commande (21) agissant par le biais d'un anneau à came (18) sur un cliquet d'arrêt (17) qui est amené en engagement et hors d'engagement avec une roue dentée à cliquet (29) tournant avec l'enrouleur (13) de telle sorte que le cliquet d'arrêt (17) bloque la roue dentée à cliquet (29) à l'encontre de la direction de traction de la ceinture lorsque la ceinture (11) est au moins essentiellement complètement étirée, et lorsque la ceinture (11) est au moins essentiellement rentrée, vient à nouveau hors d'engagement avec la roue dentée à cliquet,
**caractérisé en ce que**
à la longueur de traction totale de la ceinture de sécurité (11) correspond un angle de rotation de la roue dentée de commande (21) par rapport à l'axe de rotation (12) d'essentiellement 180 degrés, et **en ce qu'**il est prévu un transducteur qui signale la position angulaire instantanée de la roue dentée de commande (21) en tant que mesure du degré de traction de la ceinture de sécurité (11).

2. Dispositif à ceinture de sécurité selon la revendication 1, **caractérisé en ce que** l'on prévoit sur la roue dentée de commande (21) une saillie, notamment une tige (24), dont la position périphérique et/ou radiale est utilisée comme mesure du degré de traction de la ceinture de sécurité (11).

3. Dispositif à ceinture de sécurité selon la revendication 1 ou 2, **caractérisé en ce que** l'on prévoit sur la roue dentée de commande (21) un transducteur et sur le boîtier un récepteur de signaux ou inversement, et **en ce que**, par la détermination de la position relative du récepteur de signaux et du transducteur, on peut établir la position instantanée de traction de la ceinture de sécurité (11).

4. Dispositif selon l'une quelconque des revendications précédentes, **caractérisé en ce que** deux butées (22, 23) prévues à distance angulaire sur l'anneau à came (18) coopèrent avec une butée conjuguée (24) sur la roue dentée de commande (21) de telle sorte que l'anneau à came prenne une position de blocage de traction lorsque la ceinture de sécurité (11) est au moins pratiquement complètement étirée et une position de libération de traction lorsque la ceinture de sécurité (11) est au moins approximativement complètement rentrée.

5. Dispositif selon la revendication 4, **caractérisé en ce qu'**une tige (24) formant axialement la butée conjuguée depuis la roue dentée de commande (21) à une distance radiale de l'axe médian (12), s'étend dans une fente périphérique (25) de l'anneau à came, dont la largeur radiale est suffisamment grande pour que la tige (24) puisse se déplacer librement lors de la rotation de la roue dentée de commande (21) radialement dans la fente (25) et dont les extrémités périphériques forment les butées (22, 23).

6. Dispositif selon l'une quelconque des revendications précédentes, **caractérisé en ce que** l'on prévoit un palier lisse (27, 28) excentré entre l'axe médian (26) de la roue dentée de commande (21) excentré par rapport à l'axe de rotation (12) de l'enrouleur (13) et l'axe de rotation (12) de l'enrouleur (13).

7. Dispositif selon la revendication 6, **caractérisé en ce qu'**un tourillon creux de palier excentré (27) s'étend depuis une partie (38) pouvant tourner avec l'enrouleur (13) de manière excentrique par rapport à l'axe de rotation (12) de l'enrouleur (13), axialement dans un alésage de palier central (28) de la roue dentée de commande (21).

8. Dispositif selon l'une quelconque des revendications précédentes, **caractérisé en ce que** sur l'axe de rotation (12) de l'enrouleur (13) est disposée la roue dentée à cliquet (29) accouplée de manière fixe en rotation avec celui-ci, dans laquelle de préférence vient en prise radialement de l'extérieur le cliquet d'arrêt (17), qui est de préférence précontraint par un ressort (31) dans la position d'engagement.

9. Dispositif selon la revendication 8, **caractérisé en ce que** l'on prévoit sur le cliquet d'arrêt (17) en outre une saillie de commande (17') qui coopère avec la périphérie de l'anneau à came (18).

10. Dispositif selon la revendication 8, **caractérisé en ce que** dans la périphérie de l'anneau à came (18) est prévu un renfoncement d'engagement (18') et **en ce que** le cliquet d'arrêt (17) se trouve en engagement avec les dents du cliquet (30) de la roue dentée à cliquet (29) lorsque la saillie de commande (17') est encliquetée dans le renfoncement d'engagement (18'), et hors d'engagement avec les dents du cliquet (30) de la roue dentée à cliquet (29) lorsque la saillie de commande (17') se trouve en dehors du renfoncement d'engagement (18') sur la périphérie normale (18") de l'anneau à came (18).

11. Dispositif selon la revendication 10, **caractérisé en ce que** le renfoncement d'engagement se prolonge par le biais d'une surface biseautée (18''') dans la périphérie normale se trouvant radialement plus vers l'extérieur (18") de l'anneau à came (18).

12. Dispositif selon l'une quelconque des revendications précédentes, **caractérisé en ce que** l'anneau à came (18) est monté à rotation sur une saillie de palier (32) creuse, concentrique à l'axe de rotation (12), d'un boîtier (33) notamment en forme de pot, dans l'espace interne duquel vient en prise de préférence dans le siège coulissant un tourillon de palier (34) concentrique à l'enrouleur (13) et connecté fermement à celui-ci, et **en ce qu'**un tourillon de palier excentré (27) de plus grand diamètre est disposé sur le tourillon de palier central (34), lequel vient en prise dans l'alésage de palier (28) complémentaire à ce tourillon au centre de la roue dentée de commande (21), de préférence dans le siège coulissant.

13. Dispositif selon l'une quelconque des revendications précédentes, **caractérisé en ce qu'**un transducteur, notamment un segment d'aimant (37) est prévu sur l'anneau à came (18), et un récepteur de signaux, notamment un commutateur à effet Hall (36) coopérant avec celui-ci est prévu sur le boîtier (33), lequel est connecté à un dispositif d'indication de ceinture attachée (16).

14. Dispositif selon l'une quelconque des revendications précédentes, **caractérisé en ce que** le mécanisme de blocage de traction présente une saillie (44) cylindrique creuse s'étendant depuis la couronne dentée interne (20) ou le boîtier (33) radialement et axialement vers l'extérieur dans la direction de l'enrouleur (13), et une masse de capteur de ceinture (43), disposée en son intérieur, qui coopère radialement vers l'extérieur avec la saillie (44) et radialement vers l'intérieur avec le tourillon de palier (34).

15. Dispositif selon l'une quelconque des revendications précédentes, **caractérisé en ce que** le mécanisme de blocage de traction présente un capteur d'accélération, notamment un capteur d'accélération transversale (38), qui coopère notamment par le biais d'un mécanisme à cliquet (38') avec un composant connecté de manière fixe en rotation à l'enrouleur (13), de préférence la roue dentée à cliquet (29), de telle sorte que lors d'accélérations provoquées par un accident, la traction supplémentaire de la ceinture de sécurité (11) soit bloquée.

16. Dispositif selon la revendication 14 ou 15, **caractérisé en ce que** la roue dentée à cliquet (29) est réalisée en forme de pot, et la paroi présentant les dents à cliquet (30) chevauche radialement vers l'extérieur la saillie cylindrique creuse (44).
